# EUROPEAN PATENT SPECIFICATION

(11) **EP 4 356 746 B1**
(45) Date of publication and mention of the grant of the patent: **11.06.2025**
(21) Application number: 23203201.1
(22) Date of filing: 12.10.2023
(51) Int. Cl.: A23B 2/46

(54) **PASTEURIZATION APPARATUS AND RELATED METHOD FOR PROVIDING A PASTEURIZATION TREATMENT OF LIQUID FOODS**
PASTEURISIERUNGSGERÄT UND VERFAHREN ZUR PASTEURISIERUNG VON FLÜSSIGEN LEBENSMITTELN
APPAREIL DE PASTEURISATION ET MÉTHODE PAR PASTEURISATION DES ALIMENTS LIQUIDES

(30) Priority: 17.10.2022 IT 202200021351
(43) Date of publication of application: 24.04.2024
(73) Proprietor: Agricold S.r.l. Di Bolla, 12030 Torre San Giorgio (Cuneo) (IT)
(72) Inventor: BOLLA, Giorgio, I-12030 Torre San Giorgio (Cuneo) (IT)
(74) Representative: Buzzi, Notaro & Antonielli d'Oulx S.p.A.

(56) References cited:
- EP-A2- 2 599 391
- EP-B1- 1 980 156
- US-A- 4 446 778

## Description

### Field of the Invention

The present invention refers to a pasteurization apparatus and to a related method for providing a pasteurization treatment of liquid foods to be treated.

As it is generally known, pasteurization is a thermal treatment to which some liquid foods, e.g. milk, are subjected, in order to reduce the bacterial load thereof and therefore minimize the risks for the consumer's health.

The pasteurization treatment generally comprises a plurality of operative steps, which can be summarized as follows:
- a step of rapid heating of the product, from a starting temperature to a pasteurization temperature, the value whereof may vary, e.g., from a minimum value of 60° to a maximum value of 90°;
- a pasteurization step, wherein the product is maintained at the reached pasteurization temperature for a period of variable duration, depending on the value of such temperature and on the type of product to be treated;
- a step of relatively rapid cooling of the product, from the pasteurization temperature to a final temperature.

### Known Art

The pasteurizers currently available on the market are based on a double-vessel system, with a double-boiler heating technique by means of a thermovector fluid, specifically heated water. Therefore, the pasteurizer comprises an insulating container, provided with a removable cover, wherein inside the insulating container there is provided a vessel, so as to obtain an outer jacket comprised between the insulating container and the vessel. The product to be treated is received inside the vessel, and the thermovector fluid is delivered into the outer jacket, so as to increase the temperature of the liquid contained in the inner vessel. The water delivered into the outer jacket is heated by means of electric resistances or gas burners. The cooling step is performed by cooling the water contained in the outer jacket, without completely dispersing the water which is already present in the outer jacket and which has been used for the heating step. The cooling step may be performed by adding cold water into the outer jacket, through the operation of a specific control valve.

Said known art, however, is not devoid of various drawbacks.

First of all, the use of heated water does not always enable obtaining a heating of the product with the desired rapidity, especially if the product exhibits a large mass. Moreover the cooling, which must be performed as rapidly as possible and in a uniform manner, is hardly satisfying, despite the use of a large quantity of cold water.

Moreover, the implemented heat exchange is extremely unsatisfactory as regards energy efficiency, both as concerns the high waste of water, which is needed to perform the treatment, and as concerns the energy required to heat a large mass of water.

Therefore, it is absolutely uneconomical to treat the product with the known apparatus, both as regards the energy requirements and as regards the time needed to perform such a treatment.

Another known solution, which is described in document EP 1 980 156, includes the features provided in the preamble of the annexed claim 1. However, the need is still felt to provide a further improvement in an alternative solution, which in particular enables a remarkable increase of efficiency in the heating step.

### Object of the Invention

Therefore, the present invention aims at providing a pasteurization apparatus which, first of all, is adapted to overcome all the drawbacks mentioned in the foregoing.

Another object of the present invention consists in providing a pasteurization apparatus having a wide versatility of use, by adapting to different operating requirements with the use of a minimum amount of energy, in the presence of extremely variable amounts of the product to be treated.

A further object of the invention consists in providing a pasteurization treatment with is qualitatively better than the treatment performed by the known equipment.

### Summary of the Invention

The objects described in the foregoing are achieved by means of a pasteurization apparatus and by a related method according to the content of the annexed claims.

The further claims define additional features of the invention.

### Brief Description of the Figures

Further characteristics and advantages of the present invention will be apparent from the following description with reference to the annexed drawings, which are provided by way of non-limiting example only and wherein:
- Figure 1 is a schematic view showing the operation circuit of the pasteurization apparatus, according to an embodiment of the invention;
- Figures 2, 3 are perspective views of a pasteurization apparatus, according to an embodiment of the invention.

### Detailed Description of Embodiments

In the following description, various specific details are given to provide a thorough understanding of one or more exemplary embodiments. The embodiments may be practiced without one or more specific details, or with other methods, components, materials etc. In other instances, known structures, materials or operations are not shown or described in detail in order to avoid obscuring various aspects of the embodiments. Reference throughout this specification to "an embodiment" or "one embodiment" indicates that a particular feature, structure or characteristic described in connection to the embodiment is included in at least one embodiment. Therefore, the possible appearances of such phrases as "in an embodiment" or "in one embodiment" in various places throughout this specification are not necessarily referred to one and the same embodiment. Moreover, particular features, structures or characteristics may be properly combined in one or more embodiments, and/or may be associated with the embodiments in a fashion different from what is illustrated herein, so that for instance a feature exemplified herein in relation to a Figure may be applied to one or more embodiments exemplified in a different Figure.

The references provided herein are for convenience only, and therefore do not limit the extent of protection or the scope of the embodiments.

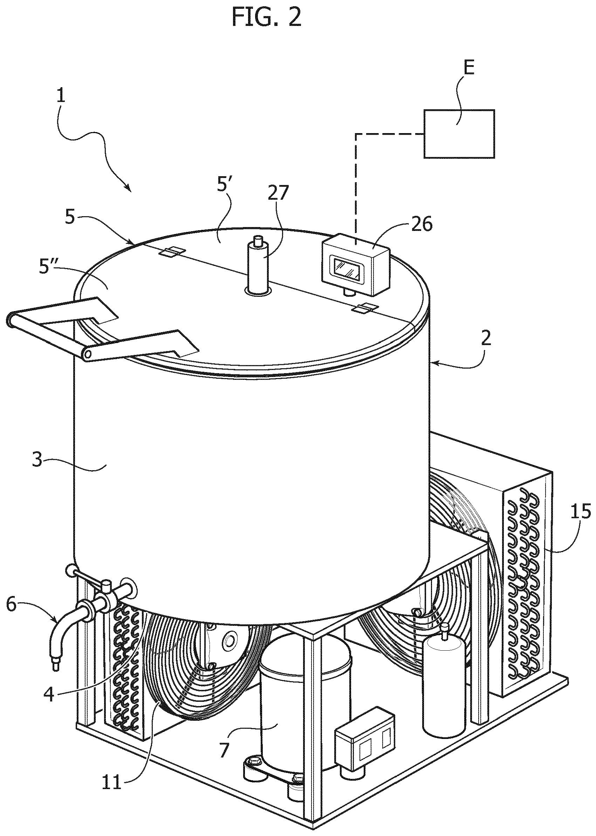

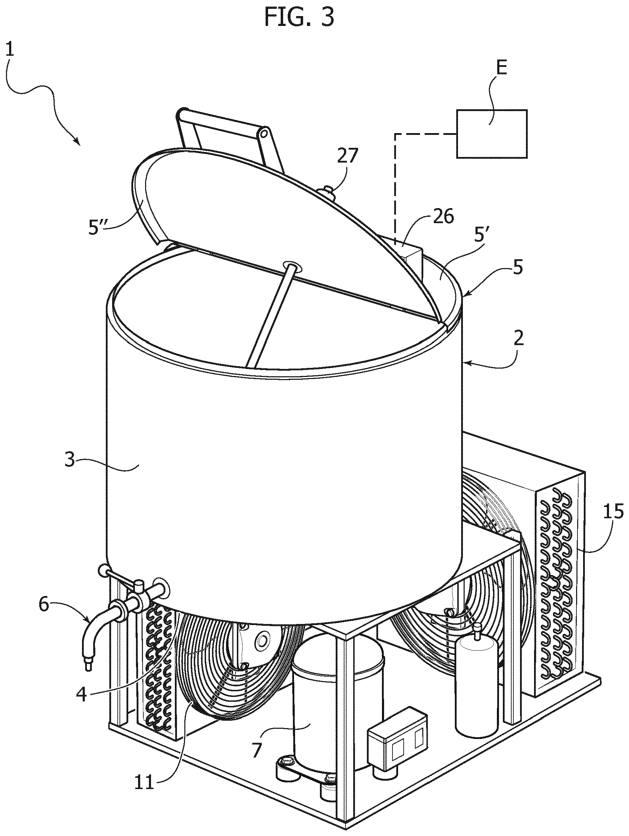

With general reference to the annexed Figures, the pasteurization apparatus 1 according to the present invention comprises a vessel 2, which is configured for containing liquid food to be treated. The vessel 2, which has for example a cylindrical shape, is provided with a side wall 3, a bottom wall 4 and a removable closing cover 5 which is arranged at the top of side wall 4, so as to define a top wall (in the closed position) opposed to the bottom wall 4. The closing cover 5 is a component movable between a lowered position and a lifted position, as shown in Figures 2, 3. By opening the cover 5, it is possible to introduce the liquid food to be treated. In one or more embodiments, the vessel comprises a stainless steel frame.

As shown in Figures 2, 3, apparatus 1 comprises a delivery faucet 6 configured for delivering the liquid product based on the control of a specific valve, e.g. for emptying the vessel 2 at the end of the pasteurization treatment.

The pasteurization apparatus 1 moreover comprises an electronic controller E, configured for controlling the pasteurization cycles by effectively alternating heating and cooling. As shown in Figures 2, 3, the pasteurization apparatus moreover comprises a man-machine interface device 26, configured for enabling a control of the operations by an operator who monitors / controls the pasteurization cycle. The interface device 26 may be implemented as a control panel provided with a touch screen. Preferably, the man-machine interface device 26 is arranged on top the removable cover 5. In this regard, as shown in Figure 3, the removable cover 5 may be configured so as to have a first portion 5', carrying said man-machine interface device 26, which always remains in a fixed position (parallel to the bottom wall 4), while a distal portion 5" of the cover 5 may be moved between a lifted and a lowered position.

According to the present invention, the pasteurization apparatus 1 comprises a heating and cooling circuit C, connected to vessel 1 and comprising a plurality of connection conduits, adapted to circulate a thermovector fluid, in particular a gas.

The circuit C is configured for performing a pasteurization treatment according to the following steps:
- a step of heating the product from a starting temperature to a pasteurization temperature;
- a pasteurization step, wherein the product is maintained at the reached pasteurization temperature for a variable time period, depending on the value of said temperature and on the type of product to be treated;
- a step of cooling the product from the pasteurization temperature to a final temperature.

As will be better detailed in the following, the apparatus 1 is configured for performing different types of pasteurization programs.

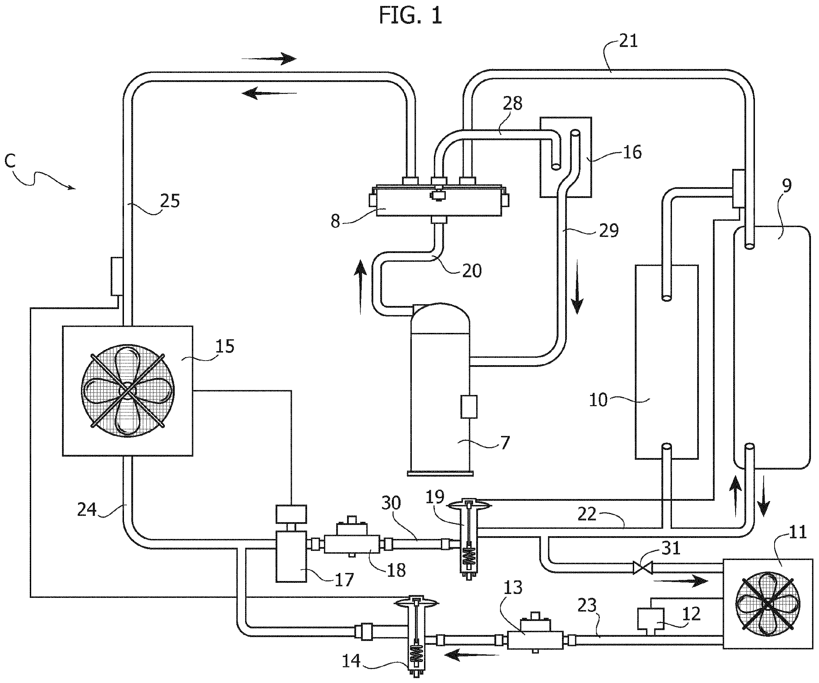

Figure 1 shows an operation diagram showing an embodiment of the circuit C associated to vessel 2.

Circuit C comprises at least one compressor 7, configured for delivering high-pressure gas which must circulate in the connection conduits of circuit C, in order to bring about the temperature increase or decrease of the liquid product to be treated, contained in vessel 2.

According to an essential feature of the present invention, the circuit C comprises at least one heat exchanger 9, 10, which is integrated in the vessel 2 and is configured for performing a direct heat exchange between the thermovector fluid (gas) and the liquid food to be treated, contained in vessel 2.

According to a preferred embodiment, circuit C comprises a first heat exchanger 9, which is integrated in the bottom wall 4 of vessel 2, and a second heat exchanger 10 which is integrated in the side wall 3 of vessel 2, so as to implement a system having a high heating capacity. Such heat exchangers 9, 10 are schematically shown in Figure 3. The heat exchanger(s) are therefore located between the inner surface, which is in contact with the liquid food to be treated, and the outer surface (on the opposite side) of the bottom wall and/or of the side wall. Of course, with the variation of the surface of the heat exchanger, the exchange capacity of apparatus 1 will vary accordingly, and so will vary the pasteurizing speed thereof.

In the following, a detailed description will be provided of the various components of the pasteurization apparatus 1 according to the invention, in accord with the schematic view of the operation circuit C of Figure 1.

As stated in the foregoing, the pasteurization apparatus 1 comprises a heating and cooling circuit C, configured for circulating a thermovector fluid, in particular gas. Therefore, the pasteurization apparatus according to the invention does not comprise a water recirculation in order to perform the heating and cooling steps which are required for achieving the desired effect on the liquid food to be treated.

Consequently, the pasteurization apparatus 1 according to the invention enables implementing a method of thermal disinfection of liquid foods (pasteurization) completely by means of a heat pump. The pasteurization apparatus 1 accordingly comprises a refrigeration circuit C, which is configured for ensuring a high efficiency in both heating and cooling and for enabling a direct exchange between the refrigeration fluid (gas) and the vessel 2, so as to maximize yield.

In the heating step, the thermovector fluid (gas) has a temperature of approximately 80°C. The cooling step envisages, for the thermovector fluid (gas), a temperature of approximately 0°C. Such cooling step is necessary in order to complete the pasteurization cycles, by guaranteeing the elimination of bacteria which may be harmful to the consumer's health.

The compressor 7 is configured for delivering high pressure gas. Downstream of compressor 7, the circuit C comprises a four-way valve 8, which is configured for being suitably controlled in order to direct the gas from compressor 7 according to the operation stages which follow each other during the pasteurization cycle. The valve 8 is connected to compressor 7 by means of a first connection conduit 20. The heat exchangers (denoted by references 9, 10, respectively for the exchanger integrated within the bottom wall 4 and within the side wall 3) are connected to the four-way valve 8 by means of a second connection conduit 21, so as to receive the hot gas coming from compressor 7. Of course, the passage of hot gas through the conduits 20, 21 and within the heat exchangers 9, 10 leads to a temperature increase of the liquid food to be treated, which is enclosed by the walls of vessel 2.

As shown in Figure 1, the circuit C moreover comprises a radiator 11, arranged downstream of the exchangers 9, 10 and connected thereto by means of a third conduit 22, configured for maintaining the temperature of the circulating gas within a predetermined limit (by dissipating excessive heat). Such a radiator 11 only operates during the heating mode, and it enables approaching the critical dew point of the refrigeration fluid being used, by working in an almost transcritical fashion and by obtaining heating temperatures which could not be achieved otherwise. In the cooling mode, the radiator 11 is not used, and the circuit becomes a classical circuit of a vapour compression refrigerator.

Downstream of the radiator 11 there is provided a fourth connection conduit 23 which includes, arranged in sequence, a regulator 12, a check valve 13 and an expansion valve 14. The check valve 13 is suitably controlled so as to direct the vector fluid in a correct fashion, according to the various steps of the pasteurization cycle. The expansion valve 14 reduces the pressure of the vector fluid, thereby decreasing the temperature thereof. A further radiator 15 is connected downstream of the expansion valve 14, and it is interposed between the latter and the four-way valve 8, thereby forming further conduits 24, 25 upstream and downstream of said further radiator 15. Said radiator 15 is configured for absorbing heat from the environment and to transfer such heat to the thermovector fluid.

The pasteurization apparatus 1 moreover comprises a mixer element 16 (schematically shown in Figure 1) for moving the liquid food inside the vessel 2 during the heating and/or the cooling step, so as to enable a more rapid heat exchange. The mixer element 16 is controlled by an electric actuator (shown in Figure 2).

The conduit 25 is connected to the four-way valve 8. The vector gas coming from conduit 25 flows through a terminal conduit 28 (connecting the four-way valve 8 to the vessel 2), and through a joining conduit 29 (connecting the vessel 2 to the compressor 7, thereby closing the circuit). As mentioned in the foregoing, the pasteurization cycle comprises a step of cooling of the product to be treated, after the heating step and the step of maintaining the temperature for a predetermined time period. In order to perform such cooling step, the thermovector fluid (gas) flows from the compressor 7 to the four-way valve 8, through the conduit 25 and the further radiator 15. Since the check valve 13 is closed, the gas flows through a further conduit 30, through a regulator 17, a check valve 18 and an expansion valve 19. With reference to Figure 1, it is to be remarked that the conduits 30, 23 are substantially parallel. Of course, in the preceding heating step, the valve 19 of conduit 30 is in a closed position, thereby enabling the gas circulation as previousy described in the heating step along the conduits 23, 25. The cold gas then reaches the exchangers 9, 10 through conduit 22 (which is in communication with the conduit 30) without traversing the radiator 11. Then, the gas returns to compressor 7 through valve 8. A further valve 31 upstream of the radiator 11 is arranged in the closed position, so as to exclude the radiator 11 from the passage of the refrigerated gas during the cooling step.

The electronic controller E automatically controls the radiators 11, 15 and the various steps of the cycle. An operator may access the various controls by means of the man-machine interface device 26 mentioned in the foregoing.

In the light of what has been described, it will therefore be appreciated that, with respect to a traditional pasteurizer including the connection to a water circuit, the present pasteurization apparatus 1 must simply be connected to a respective power supply in order to enable the operation thereof. Therefore, in comparison with the conventional art, the pasteurization apparatus according to the invention only requires a connection to the power mains, unlike the state of the art which also requires a connection to the water mains.

In the light of the previously described features of circuit C, it will be remarked that, during the heating mode, along circuit C the refrigeration gas is present in all its forms (superheated steam, dry saturated steam, saturated steam and saturated liquid), and that all the components arranged along the conduits (compressor 7, at least one heat exchanger 9, 10, radiator 11, expansion valve 14 and said further radiator 15) participate in the refrigeration cycle, thereby increasing the process efficiency. The consequence is a heating capacity amounting to the sum of the compression heat of the refrigeration gas and of the heat withdrawn from the environment by means of said further radiator 15. More specifically, during the heating mode, superheated steam flows along the second conduit 21, superheated steam and/or saturated liquid flow through the third conduit 22 (depending on the conditions encountered by the apparatus 1 during heating, due to partial loads and to the temperatures inside the container), saturated liquid flows along the fourth conduit 23, saturated steam flows along said further conduit 24 and dry saturated steam flows along conduits 25, 28, 29.

According to a further feature of the invention, the apparatus 1 comprises at least one safety system. In one or more embodiments, such safety systems include a motor protector and a gas pressure switch. The motor protector protects the compressor 7, and has a normally open contact to signal its intervention. The gas pressure switch checks whether the gas pressures within circuit C are comprised within a maximum and a minimum value, and has two outputs to emit a high pressure or low pressure alarm.

Thanks to the features outlined in the foregoing, the pasteurization apparatus according to the invention offers a plurality of advantages:
- the apparatus 1 has an electric consumption of about 2.2 kWh, unlike the equipment of the known art having the same capacity (power consumption of 6 kWh);
- water consumption is totally absent; and
- the direct exchange between heat/refrigeration source and the liquid food contained in the vessel makes the heat exchange much more efficient than in the known art.

In comparison with the equipment according to the state of the art, which implements a refrigeration step with water which is used only once, the present invention offers a meaningful reduction of the bacterial load, because the use of well water does not enable achieving temperatures lower than the water temperature (since well water has an average temperature of about 13°C). In the present invention, apparatus 1 may reach values of 4°C, thanks to the circulation of cold gas described in the foregoing.

The following description will illustrate, by way of example, a pasteurization cycle performed by the pasteurization apparatus 1 according to the invention, by making use of the components described in the foregoing.

The various components, such as in particular the radiators 11, 15, the compressor 7, the valves 13, 14, 18, 19 are activated in different fashions depending on the different steps of the cycle.

According to the present invention, the apparatus is configured to manage various operating modes, and specifically:
- direct pasteurization;
- complete pasteurization;
- heating;
- refrigeration;
- mixing; and
- stand-by mode.

With reference to the direct pasteurization mode, the liquid within vessel 2 has a temperature X (e.g., fresh milk, about 30°C) and its temperature will be increased up to a value P (selected by the user) and will be maintained at such temperature for a time period T. When time period T has elapsed (which time period may vary from 1 to 60 minutes, wherein the temperature, thanks to the insulation, is not supposed to vary beyond hysteresis), the pasteurizer will switch its operation to the cold mode, until reaching a temperature D, selected by the user, and will keep such temperature continuously, therefore controlling the temperature to rise or to decrease according to needs. While counting time period T it is not necessary to regulate the temperature.

With reference to the complete pasteurization mode, the liquid within vessel 2 has a temperature X, and such temperature will be increased up to a value P, selected by the user, and will be kept at such value for a time period T. After time period T (which may vary from 1 to 60 minutes, wherein the temperature, thanks to the insulation, is not supposed to vary beyond hysteresis), the pasteurizer will switch its operation to the cold mode, until reaching a temperature U (selected by the user). This value will have to be maintained until a time H; when the latter is reached, the heating of the product will start and will proceed until reaching temperature D.

With reference to the heating mode, the liquid within the pasteurization apparatus has a temperature X, and its temperature will be increased to a value C which is selected by the user and which will be maintained continuously.

With reference to the refrigeration mode, the liquid within the vessel 2 has a temperature X, and its temperature will be decreased to a value F, which is selected by the user and which will be maintained continuously.

With reference to the mixing mode, the liquid within the pasteurization apparatus is mixed by the mixer element 16 with cyclic operating times. In this mode, the temperature of the liquid is not controlled at all.

The interface device 26 may display a start screen in the stand-by mode, therefore enabling the selection of the various operating modes. Moreover, device 26 may display in real time the temperature of the product being treated, as well as temporary pause and stop options. In one or more embodiments, the device 26 warns the operator, by means of an anomaly signal, in the case of a failure or the failure to achieve completion of the programmed cycle.

Of course, the implementation details and the embodiments may amply vary with respect to what has been described and illustrated herein, while the scope of the present invention is defined in the annexed claims.

## Claims

1. Pasteurization apparatus (1) comprising:
- at least one vessel (2) configured for containing liquid food to be treated, wherein said vessel (2) comprises a bottom wall (4), a side wall (3) and a removable closing cover (5),
- an electronic controller (E), configured for controlling various pasteurization cycles, by alternating in a controlled fashion heating and cooling modes,
- a heating and cooling circuit (C), connected to the vessel (2) and comprising a plurality of connection conduits (20, 21, 22, 23, 24, 25, 28, 29, 30) configured for circulating a thermovector fluid, specifically a high-pressure gas,
- wherein said circuit (C) does not comprise a recirculation of water around the vessel (2) in order to implement said pasteurization cycles,
- wherein said circuit (C) comprises at least one compressor (7) configured for delivering said high-pressure gas,
said apparatus (1) being **characterized in that** the circuit (C) moreover comprises:
- a four-way valve (8) associated with the compressor (7), for directing the gas coming from the compressor (7) according to the operating steps which take place in sequence during the pasteurization cycle, wherein the valve (8) is connected to the compressor (7) by means of a first connection conduit (20),
- at least one heat exchanger (9, 10) which is integrated in said bottom wall (4) and/or said side wall (3) of the vessel (2), and which is configured for performing a direct heat exchange between the thermovector gas and the liquid food contained within the vessel (2),
- wherein said at least one heat exchanger (9, 10) is connected to the four-way valve (8) by means of a second connection conduit (21), so as to receive the hot gas coming from the compressor (7),
- a radiator (11), arranged downstream of said at least one heat exchanger (9, 10) and connected thereto by means of a third conduit (22), configured for being activated during said heating mode in order to maintain the temperature of the thermovector fluid within a predetermined limit,
- a fourth connection conduit (23) downstream of the radiator (11), wherein there are arranged in sequence a check valve (13) and an expansion valve (14), wherein the check valve (13) may be controlled to direct the thermovector fluid according to the various steps of the pasteurization cycle, and wherein the expansion valve (14) is configured for reducing the pressure of the thermovector fluid, thereby decreasing the temperature thereof,
- a further radiator (15) connected downstream of the expansion valve (14) and interposed between the latter and the four-way valve (8), thereby forming further conduits (24, 25) upstream and downstream of said further radiator (15), wherein said further radiator (15) is configured for absorbing heat from the environment and transferring it to the thermovector fluid,
- wherein said further conduit (25) downstream of said further radiator (15) is connected to the four-way valve (8),
- wherein said circuit (C) comprises a terminal conduit (28) extending from the four-way valve (8) to the vessel (2), and a joining conduit (29) extending from the vessel (2) to the compressor (7), said terminal conduit (28) being configured for receiving the thermovector fluid coming from said further conduit (25) downstream of said further radiator (15),
- so that said at least one heat exchanger (9, 10), said radiator (11), said expansion valve (14) and said further radiator (15) are all activatable in the heating mode, in order to obtain a heating capacity which amounts to the sum of the gas compression heat and of the heat withdrawn from the environment by means of said further radiator (15), and in order to maximize the efficiency of the heating mode.

2. Pasteurization apparatus (1) according to claim 1, comprising a man-machine interface device (26) configured for enabling a control of the operations by an operator who monitors/controls one or more pasteurization cycles.

3. Pasteurization apparatus (1) according to claim 2, wherein the removable cover (5) comprises a first portion (5'), carrying the man-machine interface device (26), which always remains in a fixed position, and a distal portion (5") which may be moved between a lifted and a lowered position.

4. Pasteurization apparatus (1) according to claim 1, wherein the circuit (C) is configured for performing a pasteurization cycle according to the following steps:
- a step of heating the product from a starting temperature to a pasteurization temperature;
- a pasteurization step, wherein the product is maintained at the reached pasteurization temperature for a time period which may vary according to the value of said temperature and according to the product to be treated;
- a step of cooling the product from the pasteurization temperature to a final temperature.

5. Pasteurization apparatus (1) according to claim 1, wherein said at least one heat exchanger (9, 10) is arranged between an inner surface, which contacts the liquid food to be treated, and an outer surface of the bottom wall (4) and/or of the side wall (3).

6. Pasteurization apparatus (1) according to claim 1, wherein the circuit (C) comprises a first heat exchanger (8) integrated within the bottom wall (4) of the vessel (2), and a second heat exchanger (10) integrated within the side wall (3) of the vessel (2).

7. Pasteurization apparatus (1) according to claim 1, comprising a mixer element (16) configured for moving the liquid food within the vessel (2), during the heating and/or the cooling step, so as to enable a more rapid heat exchange.

8. Pasteurization method, comprising the following steps:
- providing an apparatus (1) according to claim 1,
- controlling a step of heating the product from a starting temperature to a pasteurization temperature;
- controlling a pasteurization step, wherein the product is maintained at the reached pasteurization temperature for a time period which is variable depending on the value of such temperature and on the type of product to be treated;
- controlling a step of cooling the product from the pasteurization temperature to a final temperature.

## Patentansprüche

1. Pasteurisierungsgerät (1), umfassend:
- mindestens einen Behälter (2), der dazu ausgelegt ist, flüssiges Lebensmittel aufzunehmen, das behandelt werden soll, wobei der Behälter (2) eine Bodenwand (4), eine Seitenwand (3) und eine abnehmbare Verschlussabdeckung (5) umfasst,
- eine elektronische Steuerung (E), die dazu ausgelegt ist, verschiedene Pasteurisierungszyklen durch kontrolliertes Abwechseln von Heiz- und Kühlmodi zu steuern,
- einen Heiz- und Kühlkreislauf (C), der mit dem Behälter (2) verbunden ist und eine Mehrzahl von Verbindungsleitungen (20, 21, 22, 23, 24, 25, 28, 29, 30) umfasst, die dazu ausgelegt ist, ein Thermovektorfluid, insbesondere ein Hochdruckgas, zirkulieren zu lassen,
- wobei der Kreislauf (C) keine Rückführung von Wasser um den Behälter (2) herum umfasst, um die Pasteurisierungszyklen zu implementieren,
- wobei der Kreislauf (C) mindestens einen Verdichter (7) umfasst, der zum Zuführen des Hochdruckgases ausgelegt ist,
wobei das Gerät (1) **dadurch gekennzeichnet ist, dass** der Kreislauf (C) ferner Folgendes umfasst:
- ein dem Verdichter (7) zugeordnetes Vierwegeventil (8), um das vom Verdichter (7) kommende Gas gemäß den Betriebsschritten zu leiten, die während des Pasteurisierungszyklus nacheinander stattfinden, wobei das Ventil (8) über eine erste Verbindungsleitung (20) mit dem Verdichter (7) verbunden ist,
- mindestens einen Wärmetauscher (9, 10), der in die Bodenwand (4) und/oder die Seitenwand (3) des Behälters (2) integriert ist und der dazu ausgelegt ist, einen direkten Wärmeaustausch zwischen dem Thermovektorgas und dem in dem Behälter (2) enthaltenen flüssigen Lebensmittel durchzuführen,
- wobei der mindestens eine Wärmetauscher (9, 10) über eine zweite Verbindungsleitung (21) mit dem Vierwegeventil (8) verbunden ist, um das vom Verdichter (7) kommende Heißgas zu empfangen,
- einen Kühler (11), der stromabwärts des mindestens einen Wärmetauschers (9, 10) angeordnet und mit diesem über eine dritte Leitung (22) verbunden und dazu ausgelegt ist, während des Heizmodus aktiviert zu werden, um die Temperatur des Thermovektorfluids innerhalb einer vorbestimmten Grenze zu halten,
- eine vierte Verbindungsleitung (23) stromabwärts des Kühlers (11), wobei nacheinander ein Rückschlagventil (13) und ein Expansionsventil (14) angeordnet sind, wobei das Rückschlagventil (13) gesteuert werden kann, um das Thermovektorfluid gemäß den verschiedenen Schritten des Pasteurisierungszyklus zu leiten, und wobei das Expansionsventil (14) dazu ausgelegt ist, den Druck des Thermovektorfluids zu verringern, um dadurch dessen Temperatur herabzusetzen,
- einen weiteren Kühler (15), der stromabwärts des Expansionsventils (14) angeschlossen und zwischen Letzterem und dem Vierwegeventil (8) angeordnet ist, um dadurch weitere Leitungen (24, 25) stromaufwärts und stromabwärts des weiteren Kühlers (15) zu bilden, wobei der weitere Kühler (15) dazu ausgelegt ist, Wärme aus der Umgebung zu absorbieren und an das Thermovektorfluid zu übertragen,
- wobei die weitere Leitung (25) stromabwärts des weiteren Kühlers (15) mit dem Vierwegeventil (8) verbunden ist,
- wobei der Kreislauf (C) eine Anschlussleitung (28), die sich von dem Vierwegeventil (8) zu dem Behälter (2) erstreckt, und eine Verbindungsleitung (29) umfasst, die sich von dem Behälter (2) zu dem Verdichter (7) erstreckt, wobei die Anschlussleitung (28) dazu ausgelegt ist, das Thermovektorfluid zu empfangen, das von der weiteren Leitung (25) stromabwärts des weiteren Kühlers (15) kommt,
- sodass der mindestens eine Wärmetauscher (9, 10), der Kühler (11), das Expansionsventil (14) und der weitere Kühler (15) alle im Heizmodus aktivierbar sind, um eine Heizleistung zu erhalten, die die Summe der Gasverdichtungswärme und der über den weiteren Kühler (15) aus der Umgebung abgezogenen Wärme beträgt, und den Wirkungsgrad des Heizmodus zu maximieren.

2. Pasteurisierungsgerät (1) nach Anspruch 1, umfassend eine Mensch-Maschine-Schnittstellenvorrichtung (26), die dazu ausgelegt ist, eine Steuerung der Operationen durch einen Bediener zu ermöglichen, der einen oder mehrere Pasteurisierungszyklen überwacht/steuert.

3. Pasteurisierungsgerät (1) nach Anspruch 2, wobei die abnehmbare Abdeckung (5) einen ersten Abschnitt (5'), der die Mensch-Maschine-Schnittstellenvorrichtung (26) trägt und immer in einer festen Position verbleibt, und einen distalen Abschnitt (5") umfasst, der zwischen einer angehobenen und einer abgesenkten Position bewegt werden kann.

4. Pasteurisierungsgerät (1) nach Anspruch 1, wobei der Kreislauf (C) dazu ausgelegt ist, einen Pasteurisierungszyklus gemäß den folgenden Schritten durchzuführen:
- einen Schritt des Erhitzens des Produkts von einer Ausgangstemperatur auf eine Pasteurisierungstemperatur;
- einen Pasteurisierungsschritt, wobei das Produkt für einen Zeitraum, der je nach dem Wert der Temperatur und je nach dem zu behandelnden Produkt variieren kann, auf der erreichten Pasteurisierungstemperatur gehalten wird;
- einen Schritt des Abkühlens des Produkts von der Pasteurisierungstemperatur auf eine Endtemperatur.

5. Pasteurisierungsgerät (1) nach Anspruch 1, wobei der mindestens eine Wärmetauscher (9, 10) zwischen einer Innenfläche, die das zu behandelnde flüssige Lebensmittel berührt, und einer Außenfläche der Bodenwand (4) und/oder der Seitenwand (3) angeordnet ist.

6. Pasteurisierungsgerät (1) nach Anspruch 1, wobei der Kreislauf (C) einen ersten Wärmetauscher (8), der in die Bodenwand (4) des Behälters (2) integriert ist, und einen zweiten Wärmetauscher (10) umfasst, der in die Seitenwand (3) des Behälters (2) integriert ist.

7. Pasteurisierungsgerät (1) nach Anspruch 1, umfassend ein Mischerelement (16), das dazu ausgelegt ist, das flüssige Lebensmittel während des Heiz- und/oder des Kühlschritts innerhalb des Behälters (2) zu bewegen, um einen schnelleren Wärmeaustausch zu ermöglichen.

8. Pasteurisierungsverfahren, umfassend die folgenden Schritte:
- Bereitstellen eines Geräts (1) nach Anspruch 1,
- Steuern eines Schritts des Erhitzens des Produkts von einer Ausgangstemperatur auf eine Pasteurisierungstemperatur;
- Steuern eines Pasteurisierungsschritts, wobei das Produkt für einen Zeitraum, der in Abhängigkeit von dem Wert dieser Temperatur und von der Art des zu behandelnden Produkts regelbar ist, auf der erreichten Pasteurisierungstemperatur gehalten wird;
- Steuern eines Schritts des Abkühlens des Produkts von der Pasteurisierungstemperatur auf eine Endtemperatur.

## Revendications

1. Appareil de pasteurisation (1) comprenant :
- au moins un récipient (2) configuré pour contenir des aliments liquides à traiter, dans lequel ledit récipient (2) comprend une paroi de fond (4), une paroi latérale (3) et un couvercle de fermeture amovible (5),
- un dispositif de commande électronique (E), configuré pour commander différents cycles de pasteurisation, en alternant de manière contrôlée des modes de chauffage et de refroidissement,
- un circuit de chauffage et de refroidissement (C), raccordé au récipient (2) et comprenant une pluralité de conduits de raccordement (20, 21, 22, 23, 24, 25, 28, 29, 30) configurés pour faire circuler un fluide thermovecteur, en particulier un gaz haute pression,
- dans lequel ledit circuit (C) ne comprend pas de remise en circulation de l'eau autour du récipient (2) afin de mettre en œuvre lesdits cycles de pasteurisation,
- dans lequel ledit circuit (C) comprend au moins un compresseur (7) configuré pour administrer ledit gaz haute pression,
ledit appareil (1) étant **caractérisé en ce que** le circuit (C) comprend en outre :
- une vanne à quatre voies (8) associée au compresseur (7), pour diriger le gaz provenant du compresseur (7) en fonction des étapes de fonctionnement qui se déroulent séquentiellement pendant le cycle de pasteurisation, dans lequel la vanne (8) est raccordée au compresseur (7) au moyen d'un premier conduit de raccordement (20),
- au moins un échangeur de chaleur (9, 10) qui est intégré dans ladite paroi de fond (4) et/ou ladite paroi latérale (3) du récipient (2), et qui est configuré pour effectuer un échange thermique direct entre le gaz thermovecteur et l'aliment liquide contenu dans le récipient (2),
- dans lequel ledit au moins un échangeur de chaleur (9, 10) est raccordé à la vanne à quatre voies (8) au moyen d'un deuxième conduit de raccordement (21), de manière à recevoir le gaz chaud provenant du compresseur (7),
- un radiateur (11), agencé en aval dudit au moins un échangeur de chaleur (9, 10) et raccordé à celui-ci au moyen d'un troisième conduit (22), configuré pour être activé pendant ledit mode de chauffage afin de maintenir la température du fluide thermovecteur dans une limite prédéfinie,
- un quatrième conduit de raccordement (23) en aval du radiateur (11), dans lequel sont agencés en séquence un clapet antiretour (13) et une vanne de détente (14), dans lequel le clapet antiretour (13) peut être commandé pour diriger le fluide thermovecteur selon les différentes étapes du cycle de pasteurisation, et dans lequel la vanne de détente (14) est configurée pour réduire la pression du fluide thermovecteur, diminuant de ce fait sa température,
- un radiateur supplémentaire (15) raccordé en aval de la vanne de détente (14) et interposé entre cette dernière et la vanne à quatre voies (8), formant de ce fait des conduits supplémentaires (24, 25) en amont et en aval dudit radiateur supplémentaire (15), dans lequel ledit radiateur supplémentaire (15) est configuré pour absorber la chaleur provenant de l'environnement et la transférer au fluide thermovecteur,
- dans lequel ledit conduit supplémentaire (25) en aval dudit radiateur supplémentaire (15) est raccordé à la vanne à quatre voies (8),
- dans lequel ledit circuit (C) comprend un conduit terminal (28) s'étendant de la vanne à quatre voies (8) jusqu'au récipient (2), et un conduit de jonction (29) s'étendant du récipient (2) jusqu'au compresseur (7), ledit conduit terminal (28) étant configuré pour recevoir le fluide thermovecteur provenant dudit conduit supplémentaire (25) en aval dudit radiateur supplémentaire (15),
- de sorte que ledit au moins un échangeur de chaleur (9, 10), ledit radiateur (11), ladite vanne de détente (14) et ledit radiateur supplémentaire (15) puissent tous être activés en mode chauffage, afin d'obtenir une capacité de chauffage qui correspond à la somme de la chaleur de compression du gaz et de la chaleur extraite de l'environnement au moyen dudit radiateur supplémentaire (15), et afin de maximiser l'efficacité du mode chauffage.

2. Appareil de pasteurisation (1) selon la revendication 1, comprenant un dispositif d'interface humain-machine (26) configuré pour permettre une commande des opérations par un opérateur qui surveille/commande un ou plusieurs cycles de pasteurisation.

3. Appareil de pasteurisation (1) selon la revendication 2, dans lequel le couvercle amovible (5) comprend une première partie (5'), portant le dispositif d'interface humain-machine (26), qui reste toujours dans une position fixe, et une partie distale (5") qui peut être déplacée entre une position relevée et une position abaissée.

4. Appareil de pasteurisation (1) selon la revendication 1, dans lequel le circuit (C) est configuré pour effectuer un cycle de pasteurisation selon les étapes suivantes :
- une étape consistant à chauffer le produit depuis une température initiale jusqu'à une température de pasteurisation ;
- une étape de pasteurisation, dans laquelle le produit est maintenu à la température de pasteurisation atteinte pendant une durée qui peut varier en fonction de la valeur de ladite température et en fonction du produit à traiter ;
- une étape consistant à refroidir le produit de la température de pasteurisation à une température finale.

5. Appareil de pasteurisation (1) selon la revendication 1, dans lequel ledit au moins un échangeur de chaleur (9, 10) est agencé entre une surface interne, qui est en contact avec l'aliment liquide à traiter, et une surface externe de la paroi de fond (4) et/ou de la paroi latérale (3).

6. Appareil de pasteurisation (1) selon la revendication 1, dans lequel le circuit (C) comprend un premier échangeur de chaleur (8) intégré dans la paroi de fond (4) du récipient (2), et un second échangeur de chaleur (10) intégré dans la paroi latérale (3) du récipient (2).

7. Appareil de pasteurisation (1) selon la revendication 1, comprenant un élément mélangeur (16) configuré pour déplacer l'aliment liquide à l'intérieur du récipient (2), pendant l'étape de chauffage et/ou de refroidissement, de manière à permettre un échange thermique plus rapide.

8. Procédé de pasteurisation, comprenant les étapes suivantes :
- la fourniture d'un appareil (1) selon la revendication 1,
- la commande d'une étape consistant à chauffer le produit depuis une température initiale jusqu'à une température de pasteurisation ;
- la commande d'une étape de pasteurisation, dans laquelle le produit est maintenu à la température de pasteurisation atteinte pendant une durée qui est variable en fonction de la valeur d'une telle température et du type de produit à traiter ;
- la commande d'une étape consistant à refroidir le produit de la température de pasteurisation à une température finale.
